# EUROPEAN PATENT APPLICATION

(11) **EP 4 455 975 A1**
(43) Date of publication of application: **30.10.2024**
(21) Application number: 22910781.8
(22) Date of filing: 29.11.2022
(51) Int. Cl.: G06Q 40/08

(54) **INFORMATION PROCESSING METHOD, PROGRAM, AND INFORMATION PROCESSING DEVICE**

(30) Priority: 23.12.2021 JP 2021209540
(71) Applicant: Sumitomo Mitsui Construction Co., Ltd., Tokyo 104-0051 (JP)
(72) Inventor: KASUGA, Akio, Tokyo 104-0051 (JP)
(74) Representative: Bardehle Pagenberg Partnerschaft mbB Patentanwälte Rechtsanwälte
(86) International application number: PCT/JP2022/044018
(87) International publication number: WO 2023/120063

(57) **Abstract**

Provided is an information processing method performed by an information processing apparatus, the method including the steps of: acquiring contract information on a contract relating to an infrastructure development project for development of infrastructure, the contract being a first performance-linked contract in which a payment is made based on disaster mitigation performance accomplished through the infrastructure or a disaster insurance contract for the infrastructure; acquiring, from a fund provider, funding data regarding funds to be set based on the infrastructure development project; specifying an executor of the infrastructure development project upon acquiring the funding data; and transmitting, to the executor, order information on the infrastructure development project.

## Description

### Technical Field

The present invention relates to an information processing method, a program, and an information processing apparatus.

### Background Art

In recent years, as a countermeasure against disasters that are expected to occur, the importance of developing infrastructure and reducing damage has been advocated (see Non-Patent Document 1, for example).

### Citation List

### Non-Patent Document

Non-Patent Document 1: Satoshi Fujii, "Estimation of huge economic damage by Nankai trough earthquake and the mitigation effects by countermeasures", Japan Society of Civil Engineers Magazine, January 2020, Vol. 105, No. 1, pp. 6-9

### Summary

### Technical Problem

However, infrastructure development costs a great deal of money, and it is not easy to raise funds for such a purpose. On the other hand, estimates by various evaluation organizations indicate that when infrastructure is developed, there is economic performance accomplished through infrastructure development, such as disaster mitigation in the event of a disaster or economic performance accomplished through revitalization of the surrounding area. In addition, performance-linked contracts, in which higher payments are made for better service deliveries, are well known, and are expected to elicit the effect of encouraging private sectors to exercise their originality and ingenuity, try new services that are expected to produce beneficial results, improve existing services, and promote the growth of prospective business operators.

An object of the present invention is to provide a new mechanism for raising funds for an infrastructure development business by focusing on this performance-linked contract and returning to business operators (e.g., insurance companies, etc.) or fundraisers the economic performance accomplished through infrastructure development.

### Solution to Problem

An aspect of the present invention is directed to an information processing method performed by an information processing apparatus, including the steps of: acquiring contract information on a contract relating to an infrastructure development project for development of infrastructure, the contract being a first performance-linked contract in which a payment is made based on disaster mitigation performance accomplished through the infrastructure or a disaster insurance contract for the infrastructure; acquiring, from a fund provider, funding data regarding funds to be set based on the infrastructure development project; specifying an executor of the infrastructure development project upon acquiring the funding data; and transmitting, to the executor, order information on the infrastructure development project.

### Advantageous Effects of Invention

According to the present invention, it is possible to provide a new mechanism for raising funds for an infrastructure development business, using a performance-linked contract that returns economic performance accomplished through infrastructure development to business operators or fundraisers.

### Brief Description of Drawings

Fig. 1 is a diagram showing an example of the configuration of an information processing system 1 according to an embodiment of the present invention.
Fig. 2 is a diagram showing an example of the configuration of an information processing apparatus 10 according to an embodiment of the present invention.
Fig. 3 is a diagram showing an example of the configuration of an information processing apparatus 20 according to an embodiment of the present invention.
Fig. 4 is a diagram showing an example of the configuration of an information processing apparatus 30 according to an embodiment of the present invention.
Fig. 5 is a diagram showing an example of the configuration of an information processing apparatus 40 according to an embodiment of the present invention.
Fig. 6 is a sequence diagram showing an example of processing related to fundraising and project ordering according to an embodiment of the present invention.
Fig. 7 is a sequence diagram showing an example of payment processing according to an embodiment of the present invention.

### Description of Embodiments

Hereinafter, preferred embodiments of the present invention will be described with reference to the attached drawings. Note that constituent elements denoted by the same reference numerals in the drawings have the same or similar configurations.

### [Embodiments]

### <System >

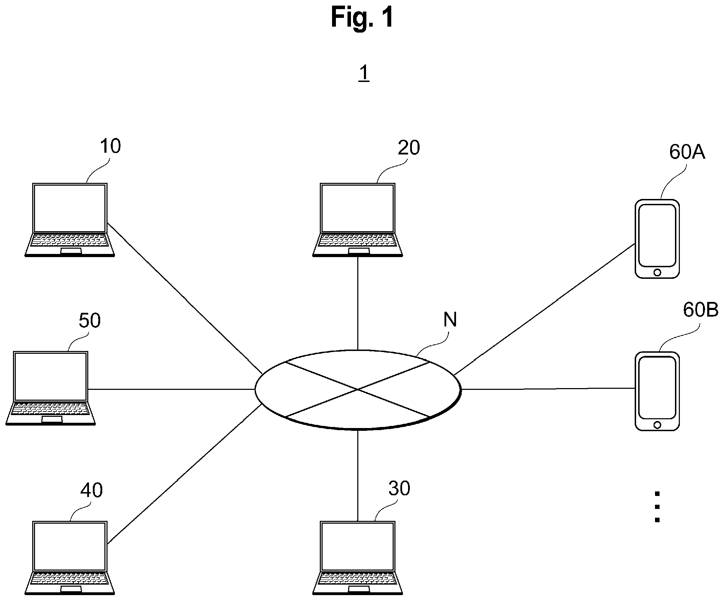

Fig. 1 is a diagram showing an example of the configuration of an information processing system 1 according to an embodiment of the present invention. As shown in Fig. 1, the information processing system 1 includes each of information processing apparatuses 10, 20, 30, 40, 50, and 60 (hereinafter also referred to as "each of the information processing apparatuses 10 to 60"), and each of the information processing apparatuses 10 to 60 can transmit and receive data to and from each other via a network N. Information processing apparatuses 60A and 60B are also denoted as an "information processing apparatus 60" when they are not distinguished from each other.

The following is an overview of a new mechanism for raising funds, which is realized by the information processing system 1 shown in Fig. 1. In the embodiment, the infrastructure includes, for example, existing logistics facilities, factories, offices, and other existing buildings. For example, the information processing apparatus 10 that is mainly used by a business operator that is an owner of the infrastructure receives information on solutions and disaster insurance (e.g., earthquake insurance) for business continuity planning (BCP) for companies and organizations in emergency situations such as disasters, from the information processing apparatus 20 that is mainly used by an insurance company such as a non-life insurance company.

For example, the information processing apparatus 10 acquires and stores contract information (first contract information) on a performance-linked contract (first performance-linked contract) for strengthening of buildings (e.g., earthquake-resistant reinforcement, etc.) for BCP, which is transmitted from the information processing apparatus 20. The information processing apparatus 10 may acquire and store contract information (insurance contract information) on non-life insurance in which disaster mitigation performance in the performance-linked contract is included in the insurance fee.

Examples of the performance-linked contract include a Pay For Success (PFS) contract in which an owner outsources the project to a business operator, sets a performance indicator corresponding to an issue to be solved, and links the payment to the achievement or improvement of the performance indicator. In the case of this performance-linked contract, the business operator to which the project is outsourced can raise funds from fund providers (investors, etc.) while providing part of future payments as a return (without necessarily paying dividends to investors, etc.), while the owner that outsources the project will make a payment only when the effects are produced, that is, this sort of contract is beneficial to both the party that outsources the project and the party to which the project is outsourced. In the information processing system 1 shown in Fig. 1, this performance-linked contract is applied to secure financial resources for infrastructure development (e.g., strengthening of buildings) by having, for example, a fund contracted with the insurance company raise funds for the costs related to the infrastructure development.

**The** information processing apparatus 20 that is mainly used by an insurance company such as a non-life insurance company provides a performance-linked contract and disaster insurance for an infrastructure development business for BCP. For example, the information processing apparatus 20 transmits first contract information on a first performance-linked contract for an infrastructure development business and insurance contract information on disaster insurance, to the information processing apparatus 10 that is used by a business operator that is an owner of the infrastructure. The first contract information contains, for example, contract information on a performance-linked contract based on the economic performance accomplished through infrastructure development with the development costs and the like of the infrastructure development business being estimated. The recovery of the cost of the infrastructure development may be included in the insurance fee of the disaster insurance.

Furthermore, the information processing apparatus 20 requests a provider that provides funds for the infrastructure development business (hereinafter also referred to as a "fund provider"), to raise or provide funds. The method of request may be by bidding or other means. The information processing apparatus 20 acquires funding data regarding funds for the infrastructure development business, from the information processing apparatus 40 that is mainly used by a fund provider. Upon acquiring the funding data, the information processing apparatus 20 transmits order information on an order for the infrastructure development business to the information processing apparatus 30 that is mainly used by a construction company or design company that executes the infrastructure development business. If funding data is acquired and it is determined based on the funding data that the cost corresponding to the development cost of the infrastructure development business is provided, the information processing apparatus 20 transmits the funding data regarding funds for the infrastructure development business to the information processing apparatus 30 that is used by the design company or construction company. The design company or construction company receives payment of the development cost and starts the infrastructure development business.

Furthermore, the information processing apparatus 20 collects an insurance fee from the owner of the infrastructure based on the insurance contract information on disaster insurance, and manages remuneration data regarding the collected insurance fee. The information processing apparatus 20 collects a performance remuneration for the disaster mitigation in the event of a disaster from the owner of the infrastructure based on the details of the infrastructure development business and the first contract information on the first performance-linked contract, and manages the remuneration data regarding the collected performance remuneration. The information processing apparatus 20 transmits the remuneration data regarding the collected insurance fee and the performance remuneration, to the information processing apparatus 40 that is used by the fund provider. The remuneration data contains data indicating the remuneration as a return for the raising or provision of funds for the infrastructure development business by the fund provider.

The information processing apparatus 30 that is used by a party such as a construction company or design company (also referred to as an "executor") that actually executes the infrastructure development business acquires the order information from the information processing apparatus 20. Upon receiving payment of the cost of the infrastructure development business, the executor starts the infrastructure development business. Payment of the cost of the infrastructure development business includes lump-sum payment and payment in installments. The information processing apparatus 30 may receive data indicating that the cost has been paid, from the information processing apparatus 20. The funding data transmitted from the information processing apparatus 20 may be data indicating that the cost has been paid.

The information processing apparatus 40 that is mainly used by the fund provider of the infrastructure development business raises funds notified by the information processing apparatus 20 in to secure financial resources for the infrastructure development business. Funds may be raised from others or may be allocated from funds in possession of the fund provider. Upon raising necessary funds, the information processing apparatus 40 transmits funding data regarding the funds to the information processing apparatus 20. The funding data may be, for example, data regarding transfer of funds. The financial resources based on the funding data of the infrastructure development business are used to execute the infrastructure development business as appropriate.

The information processing apparatus 50 that is mainly used by an organization that evaluates the infrastructure performs evaluation processing on the developed infrastructure, and calculates the economic performance accomplished through the infrastructure development. The information processing apparatus 50 transmits a report (evaluation data) regarding the evaluation results to the information processing apparatus 10, in order to notify the infrastructure owner of the evaluation results. The disaster mitigation effect by the infrastructure in the event of a disaster may be evaluated by an insurance company. In this case, the information processing apparatus 50 may be the same as the information processing apparatus 20.

**The** information processing apparatus 10 determines the amount of money to be paid to the business operator and the predetermined rights based on the evaluation results of the infrastructure and the performance-linked contract, and performs remuneration processing in order to pay the determined amount of money. If the remuneration processing is performed, the information processing apparatus 20 receives remuneration data regarding the amount of money (payment) as a return for the execution of the infrastructure development business for BCP.

This can provide a mechanism whereby profits included in the economic performance accomplished through the infrastructure development can be paid to the insurance company as appropriate based on the performance-linked contract. Furthermore, the business operator (a fund, etc.) that raised funds for the infrastructure development can receive a return for the provision of funds by having part of the insurance fee or economic performance returned by the insurance company.

Next, each of the information processing apparatuses 10 to 60 and the users thereof are described. As in the example described above, the information processing apparatus 10 is one or a plurality of information processing apparatuses that are used by an owner of infrastructure. The owner of infrastructure may be, for example, any of a state, a national agency, a government, a local government, a private company, and an individual that own the infrastructure. The infrastructure includes, for example, existing logistics facilities, factories, offices, and other existing buildings, including structures that may be strengthened for BCP.

**The** owner of the infrastructure receives, for example, a proposal from an insurance company for a first performance-linked contract concerning an infrastructure development business, and the information processing apparatus 10 acquires first contract information on the first performance-linked contract from the information processing apparatus 20 and stores the acquired first contract information. The first performance-linked contract concerning the infrastructure development business is, for example, a contract between the owner of the infrastructure (business operator) and an insurance company to which the infrastructure development business is outsourced, and includes a contract to pay at least part of the economic profit resulting from the infrastructure development from the owner of the infrastructure to the insurance company based on a predetermined condition. At least part of the economic profit resulting from the infrastructure development may be included as part of the insurance fee for the disaster insurance.

**The** information processing apparatus 20 is, for example, one or a plurality of information processing apparatuses that are mainly used by an insurance company such as a non-life insurance company. For example, if an insurance contract concerning disasters in the infrastructure development business is entered into between the insurance company and a private business operator that is the owner of the infrastructure, the insurance company collects an insurance fee from the private business operator based on the contract information. If the first performance-linked contract concerning the infrastructure development business is entered into between the insurance company and a private business operator that is the owner of the infrastructure development business, the insurance company collects a performance remuneration for the disaster mitigation from the private business operator based on the first contract information. The disaster insurance and the performance-linked contract may be proposed by the insurance company as a single set of solutions for BCP.

For example, the performance remuneration for disaster mitigation may be set by contract in advance, depending on the details of the infrastructure development business. The performance remuneration for disaster mitigation may also be added to the normal insurance fee. The insurance company may also collect a performance remuneration from the private business operator, separate from the above-mentioned performance remuneration for disaster mitigation if the private business operator is able to continue its business after the occurrence of a disaster. The information processing apparatus 20 that is used by the insurance company acquires funding data regarding the infrastructure development from the information processing apparatus 40, and transmits order information on the infrastructure development business to the information processing apparatus 30 that is used by a company that executes the infrastructure development business. The information processing apparatus 20 that is used by the insurance company transmits remuneration data regarding the insurance fee or performance remuneration collected from the private business operator, to the information processing apparatus 40.

The information processing apparatus 30 is, for example, one or a plurality of information processing apparatuses that are used by an organization that executes the infrastructure development business. This organization is, for example, a company that performs a work that strengthens buildings for the infrastructure development business, such as earthquake-resistant reinforcement, base isolation reinforcement, or vibration control reinforcement, and includes companies, organizations, or business operators that coordinate the infrastructure development business. The executor uses the information processing apparatus 40 to manage the infrastructure development business and execute the infrastructure development business according to a predetermined schedule.

The information processing apparatus 40 is, for example, one or a plurality of information processing apparatuses that are used by an organization that provides the cost of the infrastructure development business. This organization is, for example, a financial institution such as a bank or investment fund, a construction company or other company that executes the infrastructure development business or a plurality of companies or other entities that jointly raise funds. Funds may be raised from users other than the business operator that uses the information system 1 or may be allocated from funds in possession of the business operator.

**The** information processing apparatus 50 is, one or a plurality of information processing apparatuses that are used by a predetermined organization or the like that evaluates the economic performance accomplished through the infrastructure development. The predetermined organization is, for example, a third-party organization (evaluation organization) capable of fairly and appropriately evaluating the economic performance, and includes organizations accredited by a state or a government. The predetermined organization may be an insurance company that has placed an order for the infrastructure development business. In this case, the information processing apparatus 20 is used also as the information processing apparatus 50. The information processing apparatus 50 evaluates the economic performance accomplished through the infrastructure development and estimates the economic profit, executes the evaluation of the infrastructure according to the evaluation items, stores the evaluation results, and transmits a report (evaluation data) including the evaluation results to the information processing apparatus 10.

The information processing apparatus 60 is, for example, an information processing apparatus that is used by others that invest in the infrastructure development business. The others are, for example, investors or the like, and include individuals, companies, and the like that agree with and invest in the infrastructure development business. The others refer to investment information on the infrastructure development business transmitted by the information processing apparatus 40, and determine the amount of investment. The information processing apparatus 60 transmits an investment request including the amount of investment determined by the others, to the information processing apparatus 40. In the information processing system 1, the information processing apparatus 60 is not absolutely necessary if the business operator prepares all necessary funds by itself.

**The** above-described information processing apparatuses 10 to 60 are, for example, personal computers, PDAs (Personal Digital Assistants), portable terminals such as smart phones, tablet terminals, server devices, or the like, which may be each denoted as the nth information processing apparatus (1 ≤ n ≤ 6) and may be distinguished from each other.

### <Configuration>

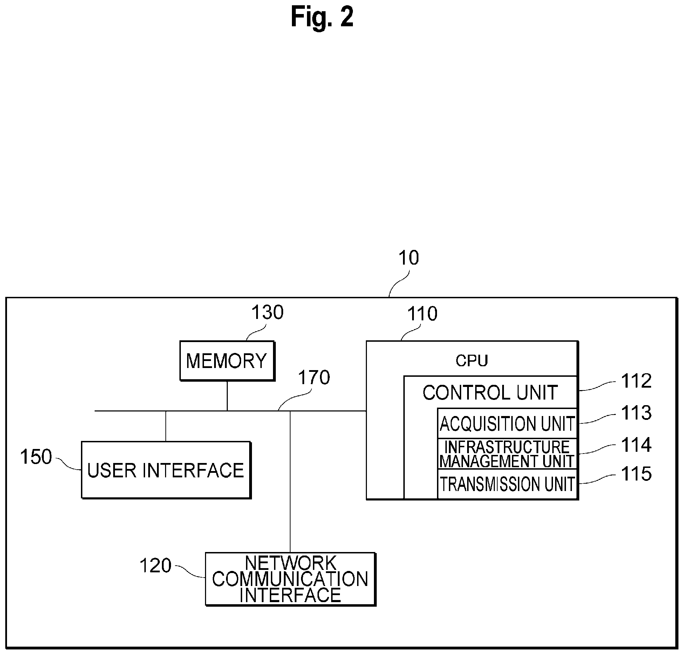

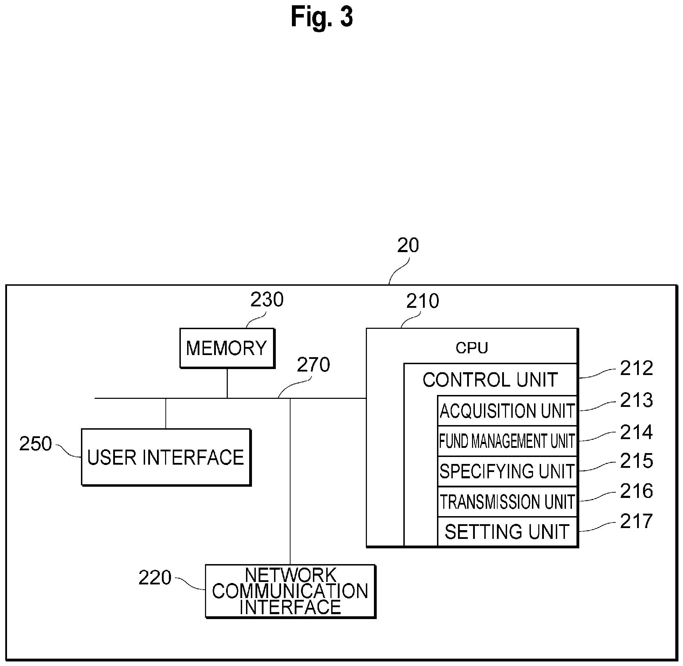

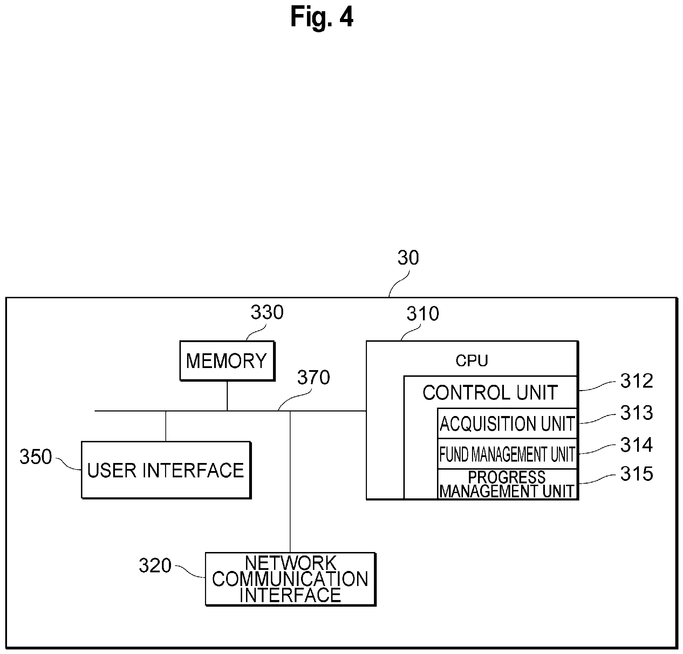

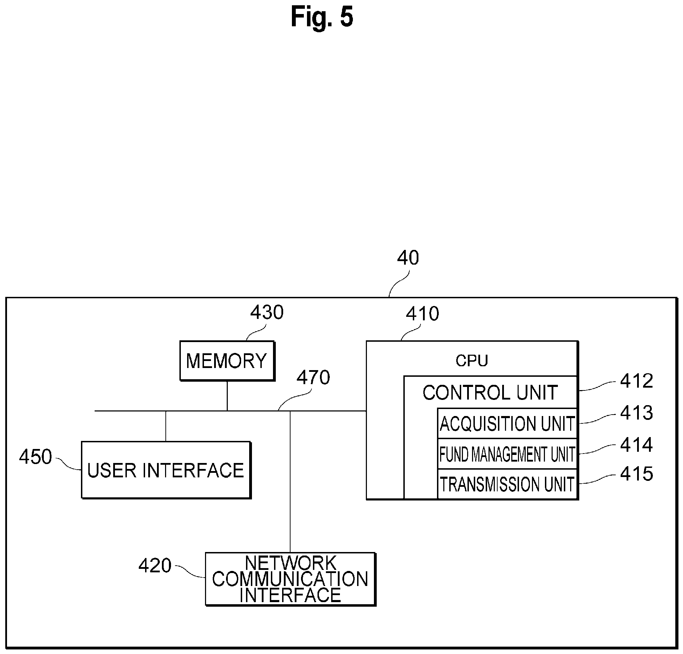

Fig. 2 is a diagram showing an example of the configuration of the information processing apparatus 10 according to an embodiment of the present invention. Fig. 3 is a diagram showing an example of the configuration of the information processing apparatus 20 according to an embodiment of the present invention. Fig. 4 is a diagram showing an example of the configuration of the information processing apparatus 30 according to an embodiment of the present invention. Fig. 5 is a diagram showing an example of the configuration of the information processing apparatus 40 according to an embodiment of the present invention. In the following, the processing of each apparatus will be described using two specific examples.

### (Specific Example 1)

In Specific Example 1, a project (construction work, etc.) in which a work that strengthens buildings such as earthquake-resistant reinforcement, base isolation reinforcement, or vibration control reinforcement is performed as an infrastructure development business (an infrastructure development project) will be described as an example. A business operator that owns existing logistics facilities, factories, or offices considers development of the infrastructure to prepare for possible future disasters for the purpose of BCP. At this time, the business operator may agree with a construction work to strengthen the buildings proposed by an insurance company, and outsource or request the insurance company to perform this construction work. The insurance company receives the cost of this construction work from a fund, and places the order for the strengthening work to a construction company or design company. The insurance company takes ownership of equipment for reinforcement (e.g., earthquake-resistant equipment, etc.). The contract period of the first performance-linked contract may coincide with the useful life of the depreciable assets of the equipment for reinforcement, for example, or it may be set by agreement between the parties.

Next, in the event of a disaster, the business operator claims from the insurance company to receive insurance proceeds from the estimated loss based on the disaster insurance, or pays the insurance company at least part of the economic value resulting from the disaster mitigation effect based on the first contract information. Examples of the disaster include earthquakes, tsunamis, storm surges, typhoons, and the like. The insurance company pays the fund provider at least part of the received part of the economic value resulting from the disaster mitigation effect as a return for the provision of funds. If the insurance company receives an insurance fee for the disaster insurance from the business operator, the fund provider may receive part of the insurance fee from the insurance company.

For example, the insurance company may offer disaster insurance with a rider. In this case, the rider includes, for example, a construction work for earthquake-resistant reinforcement, installation of equipment for earthquake-resistant reinforcement (the ownership is transferred from the insurance company to the business operator after a predetermined period of time), payment of a remuneration for the disaster mitigation performance in the event of a disaster, and the like. The remuneration for the disaster mitigation performance may be, for example, accumulated by having the business operator pay an estimated amount in monthly insurance fee payments. The estimated amount may be either variable or fixed. In the event of a disaster, the accumulated amount is offset against the disaster mitigation performance. In the event of a shortfall in the accumulated amount, the business operator may be left with a debt and may make up the debt through a separate contract with a credit guarantee company.

In Specific Example 1, the information processing apparatus 10 that performs at least part of the above-described processing includes one or a plurality of processing apparatuses (CPUs: Central Processing Units) 110, one or a plurality of network communication interfaces 120, a memory 130, a user interface 150, and one or a plurality of communication buses 170 for interconnecting these constituent elements.

The memory 130 is, for example, a fast random access memory such as DRAM, SRAM, or other random access solid state storage devices, and may also be a non-volatile memory such as one or more magnetic disk storage devices, optical disk storage devices, flash memory devices, or other non-volatile solid state storage devices, or a non-transitory recording medium.

The memory 130 stores data that is used by the information processing system 1. For example, the memory 130 stores data regarding a building strengthening project. The data regarding a building strengthening project contains, for example, the cost of the building strengthening project for buildings in possession of the business operator, evaluation data containing expected economic performance (disaster mitigation performance) and the like, the first contract information on the first performance-linked contract for the building strengthening project, and the like. The first contract information contains at least part of the publicly available data, for example, a contract period, a payment condition, and the like.

Other examples of the memory 130 may include one or a plurality of storage devices located remotely from the CPUs 110. In some embodiments, the memory 130 stores programs that are executed by the CPUs 110, modules and data structures, or subsets thereof.

**The** CPUs 110 execute programs stored in the memory 130 to configure a control unit 112, an acquisition unit 113, an infrastructure management unit 114, and a transmission unit 115.

The control unit 112 controls the general processing related to the building strengthening project. The acquisition unit 113 acquires data transmitted from each information processing apparatus. The acquisition unit 113 acquires first contract information based on the first performance-linked contract transmitted from the information processing apparatus 20, and evaluation data containing the evaluation results of the infrastructure development transmitted from the information processing apparatus 50, for example. The acquisition unit 113 may acquire insurance contract information on disaster insurance transmitted from the information processing apparatus 20.

The infrastructure management unit 114 manages the data regarding the building strengthening project. For example, the infrastructure management unit 114 stores each piece of acquired data in the memory 130 or reads data in the memory 130 as necessary.

If a predetermined condition of the performance-linked contract is satisfied, the infrastructure management unit 114 calculates the payment to be made to the insurance company. The predetermined condition of the performance-linked contract includes the occurrence of a disaster and the like.

The transmission unit 115 transmits data to given information processing apparatuses via the network communication interfaces 120. For example, the transmission unit 115 transmits information indicating that the user agrees to join the disaster insurance, information indicating that the user agrees with the first performance-linked contract, or the like, to the information processing apparatus 20. The transmission unit 115 transmits payment data (remuneration data) of the determined payment to the information processing apparatus 20.

Next, the information processing apparatus 20 that is mainly used by an insurance company such as a non-life insurance company will be described. As shown in Fig. 3, the information processing apparatus 20 includes one or a plurality of processing apparatuses (CPUs) 210, one or a plurality of network communication interfaces 220, a memory 230, a user interface 250, and one or a plurality of communication buses 270 for interconnecting these constituent elements. The constituent elements shown in Fig. 3 have similar functions and perform similar processing to those of the constituent elements denoted by the same names shown in Fig. 3. Hereinafter, among the constituent elements shown in Fig. 3, the aspects the constituent elements different from those shown in Fig. 2 will be described.

**The** memory 230 stores data that is used by the information processing system 1. For example, the memory 230 stores insurance contract information of an insurance contract concerning disasters that affect infrastructure, and stores data regarding an insurance fee collected based on the insurance contract. The memory 230 stores the first contract information on the first performance-linked contract concerning the building strengthening project, and stores data regarding a remuneration (M1) acquired as the performance remuneration for disaster mitigation based on the first performance-linked contract. The memory 230 stores the second contract information on the second performance-linked contract concerning the performance remuneration for disaster mitigation based on the first performance-linked contract, and stores data regarding remuneration, where part of the performance remuneration, for example, M1×β% is taken as the performance remuneration for the fund provider based on the second contract information. The memory 230 may store data regarding remuneration, where α% of the insurance fee is taken as the remuneration for the fund provider. In this case, α is taken as a first coefficient, and β is taken as a second coefficient.

The CPUs 210 execute programs stored in the memory 230 to configure a control unit 212, an acquisition unit 213, a fund management unit 214, a specifying unit 215, and a transmission unit 216.

The control unit 212 controls the processing of the constituent elements, which will be described later, and performs processing related to building strengthening solutions for BCP. The building strengthening solutions are, for example, that an insurance company receives funds from a fund, and the insurance company places an order for a building strengthening project to a construction company or the like.

The acquisition unit 213 acquires insurance contract information on disaster insurance for buildings. The insurance contract information contains, for example, a contract period, a payment condition, and the like. The acquisition unit 213 acquires first contract information on a first performance-linked contract, which is a contract relating to a building strengthening project for strengthening buildings and in which a payment is made based on the disaster mitigation performance accomplished through the strengthening of buildings. The acquisition unit 213 acquires funding data regarding funds set based on the first contract information, from the information processing apparatus 40. The acquisition unit 213 may acquire insurance contract information on a disaster insurance contract in which an insurance fee is set taking the disaster mitigation effect resulting from the strengthening of buildings into account, instead of or in addition to the first contract information.

The fund management unit 214 stores the funding data acquired from the information processing apparatus 40, in association with information for identifying the building strengthening project, in the memory 230. The information for identifying the building strengthening project includes information that indicates the building strengthening project and makes it distinguishable from other projects. This identifying information may be generated by the information processing apparatus 20. The memory 230 stores the remuneration data regarding the collected insurance fee and the performance remuneration for disaster mitigation, contact information of the executor of the building strengthening project (IP address, email address of the person in charge), and the like, in association with this identifying information.

**The** specifying unit 215 specifies an executor of the building strengthening project based on the building strengthening project upon acquiring the funding data from the information processing apparatus 40. For example, the specifying unit 215 refers to the memory 230 and specifies contact information of an executor associated with the same identifying information as that associated with funding data allocated to the financial resources.

The transmission unit 216 transmits order information on the building strengthening project to the specified executor. The order information may contain the construction method including building strengthening techniques and the like. The transmission unit 216 may transmit funding data indicating that funds for the building strengthening project have been allocated to the financial resources, to the information processing apparatus 30 of the executor. In this case, the funding data is data indicating that the collected funds have been allocated to the financial resources, such as a notice of completion of transfer to a predetermined account. This allows the funds raised for the building strengthening project to be allocated to the financial resources of the building strengthening project, and the executor to be notified that the allocation of the financial resources has been completed.

Furthermore, the information processing apparatus 20 may be an apparatus that is used by an insurance company, and the acquisition unit 213 may acquire the first contract information and the insurance contract information on disaster insurance for buildings. This allows the information processing apparatus 20 to improve processing efficiency because there is no need to separately contract for the contract relating to disaster insurance and the first performance-linked contract and no need for the contract information to be transmitted separately for each.

Furthermore, the transmission unit 216 may transmit second contract information on a second performance-linked contract, which is a contract relating to a building strengthening project and in which a payment is made based on the disaster mitigation performance of the first performance-linked contract, to the information processing apparatus 40. In this case, the acquisition unit 213 acquires condition information containing a payment condition (performance remuneration × β) regarding the payment determined based on the second contract information, from the party (fund provider) to which the second contract information is transmitted. In this case, β is, for example, 0.5. This allows a mechanism to be established in which the insurance company has other companies collect funds for the building strengthening project and pays part of the performance remuneration received from the business operator as a return thereof.

The setting unit 217 configures settings such that if the second performance-linked contract is entered into between the insurance company and a fund, part of an insurance fee (insurance fee × α) received through disaster insurance for buildings is paid to the party (fund provider) with which the second performance-linked contract is entered into. In this case, α is, for example, 0.5. This allows the fund to receive a periodic return even if no disaster occurs.

Furthermore, the first contract information may contain condition information on a condition under which a payment is made if a disaster occurs during a contract period and the business using a building subjected to the building strengthening project is able to continue after the disaster. For example, the condition information is a payment condition calculated in advance based on economic losses in the case in which building collapses, and may be included in the first contract information.

Furthermore, the first contract information contains, for example, a contract period, a payment condition, and the like. The disaster mitigation performance includes, for example, at least one of the following examples.
- The economic value of social and private capital that could be maintained (damage could be avoided) by the infrastructure development. Examples thereof include the amount of direct damage that would have occurred in the absence of the infrastructure development. Specific examples thereof include the economic value of office buildings, facilities, factories, etc. (private capital).
- The economic value that could be created by the above-mentioned private capital. Examples thereof include the amount of indirect damage in the absence of the infrastructure development. Specific examples thereof include rents of office buildings in the above example, economic losses due to the collapse of logistics facilities, etc.
- The value related to environmental protection (or environmental preservation) resulting from the infrastructure development (e.g., reduction of CO₂ emissions).
- Other tax benefits/reductions due to the infrastructure development, etc.

Furthermore, the first contract information may contain the cost of the infrastructure development business, and the funds to be raised may be set based on this cost. The funds include funds in possession of the business operator, bonds, and the like. The funding data contains, for example, funding data regarding funds in possession of the business operator and funding data regarding funds raised from others.

Furthermore, if a predetermined condition contained in the first performance-linked contract is satisfied, the acquisition unit 213 may acquire payment data (remuneration data) transmitted by the information processing apparatus 10.

Furthermore, if the first contract information on the first performance-linked contract contains the contract period and the amount of money corresponding to the disaster mitigation performance, the setting unit 217 may set a third coefficient (hereinafter also referred to as "γ") that is applied to the amount of money corresponding to the disaster mitigation performance if the infrastructure is damaged during the contract period, at least based on the contract period and the amount of money corresponding to the disaster mitigation performance. For example, the larger the amount of money corresponding to the disaster mitigation performance is or the longer the contract period is, the lower the third coefficient that may be set by the setting unit 217 is.

This allows the payment in the event of a disaster to be appropriately set based on the contractual terms of the first performance-linked contract. If a disaster occurs a plurality of times within a defined contract period (e.g., 20 years), a plurality of payments may be made.

The acquisition unit 213 may acquire probability data regarding the probability of occurrence of damage from a predetermined database. For example, the acquisition unit 213 acquires probability data indicating the probability of occurrence of a disaster announced by organizations that study the occurrence of disasters, from databases of these organizations and the like. If reference destinations and the like of the predetermined databases are registered in advance, the acquisition unit 213 may specify a database from the reference destinations as necessary and acquire the probability data.

In this case, the setting unit 217 may set the first to third coefficients based further on the acquired probability data. For example, the setting unit 217 may set the first to third coefficients using a predetermined calculation formula that synthesizes the probability data, the contract period, the amount of money corresponding to the disaster mitigation performance, and the development cost.

Furthermore, the setting unit 217 may set a calculation formula using the first to third coefficients as parameters, such that the payment calculated from the set first to third coefficients is greater than or equal to the funds raised. The setting unit 217 may perform simulations based on past cases and set appropriate first to third coefficients from the calculation formula using the first to third coefficients as parameters. The setting unit 217 may set appropriate first to third coefficients using a machine-learned learning model that finds appropriate first to third coefficients, based on the probability data from a plurality of cases, the contract period, the amount of money corresponding to the disaster mitigation performance, and the development costs.

This allows the payment (remuneration) in the event of a disaster to be more appropriately set based on the contractual terms of the performance-linked contract and the probability of occurrence of a disaster. For example, the probability of occurrence can be used to improve the appropriateness for setting payments.

Next, the information processing apparatus 30 that is mainly used by a business operator that undertakes the building strengthening project will be described. As shown in Fig. 4, the information processing apparatus 30 includes one or a plurality of processing apparatuses (CPUs) 310, one or a plurality of network communication interfaces 320, a memory 330, a user interface 350, and one or a plurality of communication buses 370 for interconnecting these constituent elements. The constituent elements shown in Fig. 4 have similar functions and perform similar processing to those of the constituent elements denoted by the same names shown in Fig. 2. Hereinafter, among the constituent elements shown in Fig. 4, the aspects the constituent elements different from those shown in Fig. 2 will be described.

**The** memory 330 stores data that is used by the information processing system 1. For example, the memory 330 stores the progress regarding the building strengthening project and the like, and stores data regarding funds for the building strengthening project.

**The** CPUs 310 execute programs stored in the memory 330 to configure a control unit 312, an acquisition unit 313, a fund management unit 314, and a progress management unit 315.

**The** control unit 312 controls the processing of the constituent elements, which will be described later, and performs processing related to the execution of the building strengthening project.

**The** acquisition unit 313 acquires the order information regarding the building strengthening project, from the information processing apparatus 20. The order information contains information such as the construction method, the delivery date, and the cost for strengthening buildings. The acquisition unit 313 may acquire funding data regarding the building strengthening project from the information processing apparatus 20.

The fund management unit 314 manages financial resources based on the funding data regarding the building strengthening project. The fund management unit 314 may also manage the cost of equipment and materials used for construction works regarding the building strengthening project.

The progress management unit 315 manages the progress state regarding the building strengthening project. For example, the progress management unit 315 manages the progress state of construction works such that the current status of the construction works can be monitored.

Next, the information processing apparatus 40 that is used by a company that invests in the building strengthening project will be described. As shown in Fig. 5, the information processing apparatus 40 includes one or a plurality of processing apparatuses (CPUs) 410, one or a plurality of network communication interfaces 420, a memory 430, a user interface 450, and one or a plurality of communication buses 470 for interconnecting these constituent elements. The constituent elements shown in Fig. 5 have similar functions and perform similar processing to those of the constituent elements denoted by the same names shown in Fig. 2. Hereinafter, among the constituent elements shown in Fig. 5, the aspects the constituent elements different from those shown in Fig. 2 will be described.

The memory 430 stores data that is used by the information processing system 1. For example, the memory 430 stores funding data regarding the cost of the infrastructure development business.

The CPUs 410 execute programs stored in the memory 430 to configure a control unit 412, an acquisition unit 413, a fund management unit 414, and a transmission unit 415.

The control unit 412 controls the processing of the constituent elements, which will be described later, and performs processing related to the investment in the infrastructure development business.

The acquisition unit 413 acquires investment information for a building strengthening project that is publicly available, for example, on a web page. The investment information contains, for example, the details of the building strengthening project and the company's desired conditions for investment in the building strengthening project (e.g., the amount of investment, the period for raising funds, etc.).

The fund management unit 414 acquires funding data regarding the investment according to the amount of investment set according to the investment information acquired by the acquisition unit 413, based on the operation of the investors or the like. The amount of investment (funds) may be allocated from funds in possession of a fund or the like of the fund provider.

The transmission unit 415 transmits the funding data acquired by the fund management unit 414, to the insurance company. In this case, funding data regarding part of the insurance fee that the insurance company collects from the business operator that has contracted disaster insurance disaster insurance for buildings is returned to the fund provider as a return for the securing of funds for the building strengthening project for the insurance company. Part of the performance remuneration for the disaster mitigation effect may be returned to the fund provider in the event of a disaster.

As described above, the embodiment of the present invention can be applied to the building strengthening project in Specific Example 1. According to Specific Example 1, it is possible to provide a solution for BCP that is beneficial to each of a business operator that owns or will own buildings and the like, an insurance company, and a fund provider.

A benefit to the business operator is that by paying the insurance fee, construction works such as earthquake-resistant reinforcement can be performed at no cost. Another benefit to the business operator is that economic losses can be avoided due to BCP through the building strengthening project. In addition, when the contract period of the building strengthening project expires, the business operator can obtain equipment for the building strengthening project from the insurance company at no cost.

**The** insurance company can offer disaster insurance along with the building strengthening project for BCP. The insurance company can receive investment from other companies for the costs of the building strengthening project, thereby significantly reducing its own cost burden. The insurance company can receive periodic insurance fees as well as a performance remuneration for disaster mitigation in the event of a disaster. The insurance company may also receive a separate performance remuneration for business continuity from the business operator after the occurrence of a disaster. The performance remuneration may be calculated from the economic losses due to the inability to continue the business, and the receipt of a separate performance remuneration may be contracted in advance.

The fund provider such as a fund can periodically receive part of an insurance fee from the insurance company as a return, and also receive part of the performance remuneration for disaster mitigation from the insurance company as a return in the event of a disaster.

### (Specific Example 2)

Specific Example 2 is the same as Specific Example 1 in that the infrastructure development business involves a building strengthening project, but is different therefrom in that a fund provider such as a fund can receive subsidies by submitting a prescribed subsidy application to a state or the like.

For example, the fund management unit 414 of the information processing apparatus 40 applies to a state or a local government for subsidies related to the greenhouse gas reduction, if such a system exists. In this case, the fund management unit 414 may acquire funding data regarding the subsidy based on the greenhouse gas reduction effects certified by the evaluation organization after the occurrence of a disaster.

Furthermore, the acquisition unit 213 of the information processing apparatus 20 may receive contract information on the receipt of at least part of a subsidy based on the greenhouse gas reduction applied for by the fund provider of the infrastructure development business. In this case, the insurance company may also acquire part of the subsidy acquired by the fund.

**As** described above, in Specific Example 2, disaster mitigation allows for greenhouse gas reduction, but if there is a subsidy to be paid to a company or the like that that helped fund a business involving the greenhouse gas reduction, the fund provider can apply for that subsidy. The data flow and processing of each information processing apparatus in Specific Example 2 are the same as the data flow and processing in Specific Example 1.

**As** described above for Specific Examples 1 and 2, both of which use a performance-linked contract, insurance companies are expected to build better infrastructure in order to effectively use the funds raised and increase performance remunerations and other payments based on the evaluation of the infrastructure. If better infrastructure is built, the owner of the infrastructure will also benefit from the economic profit resulting from the infrastructure. In other words, the application of a performance-linked contract provides an incentive for the insurance company to increase the payment (remuneration) and the like by increasing the evaluation of the infrastructure, and provides the business operator that is an owner of the infrastructure with an increased possibility that the infrastructure development business will be reliably executed, and thus the planning of the infrastructure development business can be encouraged.

### <Explanation of Operation>

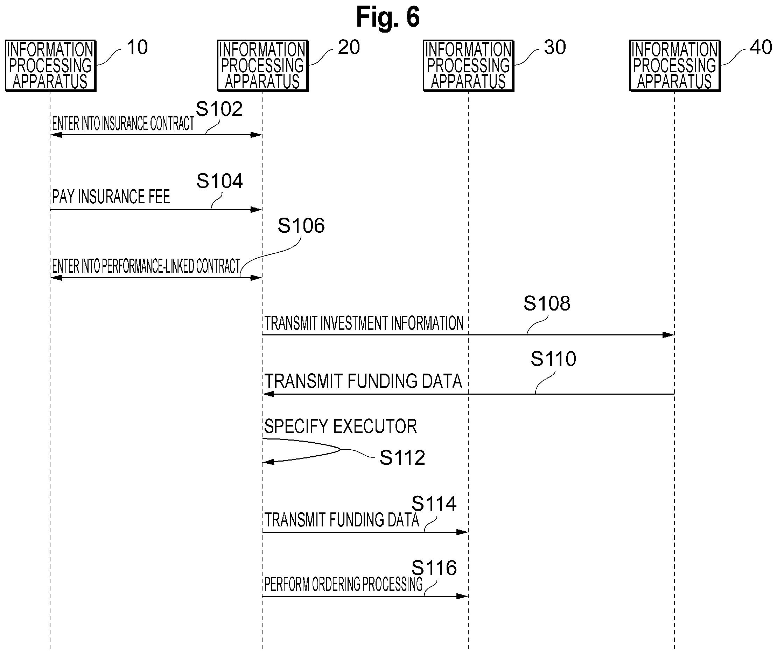

Next, each operation of the information processing system 1 related to the fundraising and order placement processing will be described. Fig. 6 is a sequence diagram showing an example of processing related to fundraising and project ordering according to an embodiment of the present invention. The processing shown in Fig. 6 can be applied in the same way in Specific Examples 1 and 2.

In step S102, the control unit 212 of the information processing apparatus 20 and the control unit 112 of the information processing apparatus 10 share the insurance contract information on disaster insurance for the infrastructure, and thus an insurance contract is entered into between the business operator that owns or will own the infrastructure and the insurance company.

In step S104, the transmission unit 115 of the information processing apparatus 10 transmits payment data of an insurance fee regarding the disaster insurance contract for the infrastructure development business, to the information processing apparatus 20. With respect to step S104, the payment of the insurance fee is made periodically.

In step S106, the control unit 212 of the information processing apparatus 20 and the control unit 112 of the information processing apparatus 10 share the first contract information on the first performance-linked contract concerning the infrastructure development business, and thus a first performance-linked contract concerning the infrastructure development business is entered into between the insurance company that undertakes the infrastructure development business and the business operator that has the infrastructure. The first performance-linked contract may be included in the insurance contract information and the insurance fee may be set taking the performance remuneration into account. In this case, step S106 is unnecessary. There is no limitation on the order of the processing in steps S102 to S106.

In step S108, the fund management unit 214 of the information processing apparatus 20 determines the amount of investment to be received in consideration of the development costs required for the infrastructure development business, and the transmission unit 216 transmits the investment information containing investment conditions including the amount of investment and return information, to the information processing apparatus 40 that is used by others.

In step S110, the fund management unit 414 of the information processing apparatus 40 raises funds required for the infrastructure development business based on the investment information, and transmits funding data regarding the funds to the information processing apparatus 20. The fund management unit 214 of the information processing apparatus 10 associates the acquired funding data with information for identifying the infrastructure development business.

In step S112, the specifying unit 215 of the information processing apparatus 20 specifies an executor of the infrastructure development business. Information indicating the executor of the infrastructure development business is stored in association with the information for identifying the infrastructure development business and the like stored in the memory 230.

In step S114, the transmission unit 216 of the information processing apparatus 20 transmits funding data regarding the raised funds (e.g., data indicating that payment has been made) to the information processing apparatus 30 of the executor.

In step S116, the transmission unit 216 of the information processing apparatus 20 transmits the order information regarding the infrastructure development business to the information processing apparatus 30 of the executor. There is no limitation on the order between step S114 and step S116.

Through the above-described processing, the application of a performance-linked contract provides an incentive for the insurance company to increase the payment and the like by increasing the evaluation of the infrastructure, and provides the business operator that is an owner of the infrastructure with an increased possibility that the infrastructure development business will be reliably executed, and thus the planning of the infrastructure development business can be encouraged.

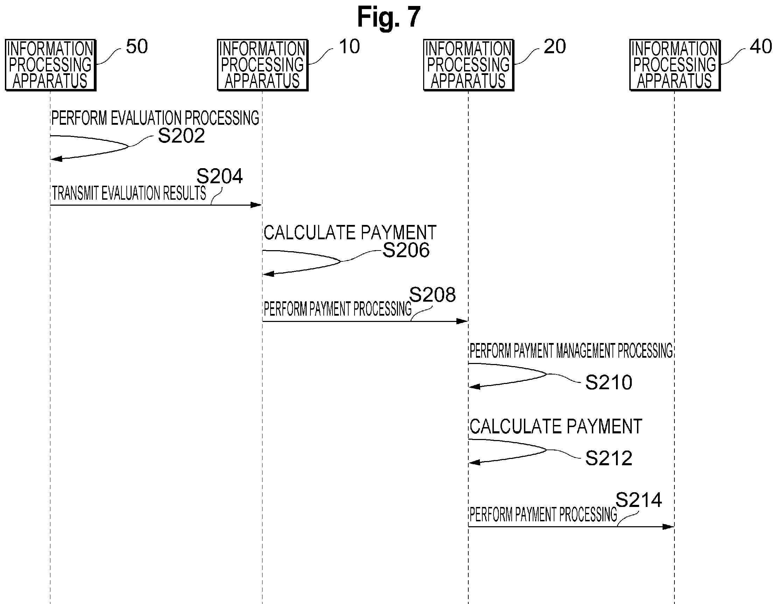

Fig. 7 is a sequence diagram showing an example of payment processing according to an embodiment of the present invention. The processing shown in Fig. 7 can be applied in the same way in Specific Examples 1 and 2.

In step S202, the information processing apparatus 50 that is used by an organization that performs evaluation evaluates the economic performance accomplished through the infrastructure. The economic performance may be an estimated amount. The evaluation organization may be the insurance company.

In step S204, the information processing apparatus 50 transmits evaluation data containing the evaluation results to the information processing apparatus 10 that is used by the owner of the infrastructure.

In step S206, the infrastructure management unit 114 of the information processing apparatus 10 calculates the payment with reference to the first contract information on the first performance-linked contract, based on the economic performance contained in the evaluation results. For example, the payment is calculated using the first coefficient for the amount of money corresponding to the economic performance.

In step S208, the infrastructure management unit 114 of the information processing apparatus 10 performs processing for paying the calculated payment to the insurance company. For example, the infrastructure management unit 114 performs processing for transferring the payment to a predetermined bank. The transmission unit 115 of the information processing apparatus 10 transmits payment data (remuneration data) regarding the payment to the information processing apparatus 20. The payment data is, for example, data indicating that the payment has been completed.

In step S210, the acquisition unit 213 of the information processing apparatus 20 acquires the payment data, and the fund management unit 214 manages the payment based on the payment data. The fund management unit 214 performs processing for making the payment to the fund provider as necessary at a predetermined point in time in step S212 or thereafter.

In step S212, the fund management unit 214 of the information processing apparatus 20 calculates the payment (second payment) to be made to the fund provider with reference to second contract information, based on the payment (first payment) calculated with reference to the first contract information. For example, the fund management unit 214 calculates the second payment by multiplying the first payment by a predetermined coefficient.

In step S214, the fund management unit 214 of the information processing apparatus 20 performs processing for paying the calculated second payment to the fund provider (a fund, etc.). For example, the fund management unit 214 performs processing for transferring the payment to a predetermined bank. The transmission unit 216 of the information processing apparatus 20 transmits payment data (remuneration data) regarding the second payment to the information processing apparatus 40. The payment data is, for example, data indicating that the payment has been completed.

Through the above-described processing, at a predetermined point in time, the evaluation organization that is a third party can evaluate the economic performance accomplished through the infrastructure, the owner of the infrastructure can determine the payment as a return for the raising of funds for the infrastructure development business based on the evaluation results, and the insurance company can receive the payment.

Furthermore, if the setting conditions of the payment and the like are included in the contract information of the performance-linked contract, the payment processing can be smoothly performed after the completion of the evaluation processing, and thus the system efficiency can be increased. Since the information processing apparatus 20 has the setting conditions of the payment, once the evaluation results are obtained, the confirmation processing can be easily performed to ensure that the payment is correct, that is, there is no need to perform the confirmation processing again, and thus the processing efficiency of the confirmation processing can be increased.

Each of the embodiments described above is intended to facilitate understanding of the present invention and is not to be construed as limiting the invention. The invention may be modified and improved without departing from the gist thereof and the invention also includes equivalents thereof. That is to say, each embodiment with appropriate design changes made by a person skilled in the art is also included in the scope of the invention as long as it has the features of the invention. For example, each element of each embodiment and its arrangement, material, condition, shape, size, and the like are not limited to those shown in the examples, but can be changed as appropriate. Also, each embodiment is merely an example, and it will be appreciated that partial replacement or combination of the configurations shown in the different embodiments is possible, and these are also included in the scope of the invention as long as they have the features of the invention. For example, the fund may be able to place an order to the executor of the infrastructure development business.

### Reference Signs List

- 1: Information processing system
- 10 to 60: Information processing apparatus
- 110: CPU
- 112: Control unit
- 113: Acquisition unit
- 114: Infrastructure management unit
- 115: Transmission unit
- 130: Memory
- 210: CPU
- 212: Control unit
- 213: Acquisition unit
- 214: Fund management unit
- 215: Specifying unit
- 216: Transmission unit
- 217: Setting unit
- 230: Memory
- 310: CPU
- 312: Control unit
- 313: Acquisition unit
- 314: Fund management unit
- 315: Progress management unit
- 330: Memory
- 410: CPU
- 412: Control unit
- 413: Acquisition unit
- 414: Fund management unit
- 415: Transmission unit

## Claims

1. An information processing method executed by an information processing apparatus, the method comprising the steps of:
acquiring contract information on a contract relating to an infrastructure development project for development of infrastructure, the contract being a first performance-linked contract in which a payment is made based on disaster mitigation performance accomplished through the infrastructure or a disaster insurance contract for the infrastructure;
acquiring, from a fund provider, funding data regarding funds to be set based on the infrastructure development project;
specifying an executor of the infrastructure development project upon acquiring the funding data; and
transmitting, to the executor, order information on the infrastructure development project.

2. The information processing method according to claim 1, wherein
the information processing apparatus is an apparatus that is used by an insurance company, and
the acquiring the contract information includes acquiring first contract information on the first performance-linked contract and insurance contract information on the disaster insurance contract.

3. The information processing method according to claim 1 or 2, further comprising the steps of: by the information processing apparatus,
transmitting, to the fund provider, second contract information on a second performance-linked contract in which a payment is made based on the disaster mitigation performance of the first performance-linked contract; and
receiving, from the fund provider, condition information containing a payment condition regarding the payment determined based on the second contract information.

4. The information processing method according to claim 3, further comprising the step of: by the information processing apparatus,
configuring settings such that in a case in which the second performance-linked contract is entered into, part of an insurance fee received through disaster insurance for the infrastructure is paid to the fund provider.

5. The information processing method according to any one of claims 1 to 4, wherein the contract information contains condition information on a condition under which a payment is made in a case in which a disaster occurs during a contract period and a business using the infrastructure is able to continue after the disaster.

6. The information processing method according to any one of claims 1 to 5, further comprising the step of: by the information processing apparatus,
receiving, from the fund provider, subsidy contract information that enables receipt of at least part of a subsidy based on greenhouse gas reduction applied for by the fund provider.

7. A program for causing an information processing apparatus to:
acquire contract information on a contract relating to an infrastructure development project for development of infrastructure, the contract being a first performance-linked contract in which a payment is made based on disaster mitigation performance accomplished through the infrastructure or a disaster insurance contract for the infrastructure;
acquire, from a fund provider, funding data regarding funds to be set based on the infrastructure development project;
specify an executor of the infrastructure development project upon acquiring the funding data; and
transmit, to the executor, order information on the infrastructure development project.

8. An information processing apparatus comprising:
an acquisition unit configured to acquire contract information on a contract relating to an infrastructure development project for development of infrastructure, the contract being a first performance-linked contract in which a payment is made based on disaster mitigation performance accomplished through the infrastructure or a disaster insurance contract for the infrastructure, and acquire, from a fund provider, funding data regarding funds to be set based on the infrastructure development project;
a specifying unit configured to specify an executor of the infrastructure development project upon acquiring the funding data; and
a transmission unit configured to transmit, to the executor, order information on the infrastructure development project.
